# EUROPÄISCHE PATENTSCHRIFT

(11) **EP 3 095 944 B1**
(45) Veröffentlichungstag und Bekanntmachung des Hinweises auf die Patenterteilung: **13.01.2021**
(21) Anmeldenummer: 16159960.0
(22) Anmeldetag: 11.03.2016
(51) Int. Cl.: E06B 1/02

(54) **BAUWERKSABSCHNITT MIT FENSTERRAHMEN**
STRUCTURE SECTION HAVING A WINDOW FRAME
SECTION D'OUVRAGE COMPRENANT UN CADRE DE FENETRE

(30) Priorität: 18.05.2015 EP 15168003
(43) Veröffentlichungstag der Anmeldung: 23.11.2016
(73) Patentinhaber: ISO-Chemie GmbH, 73431 Aalen (DE)
(72) Erfinder:
(74) Vertreter: Wächter, Jochen

(56) Entgegenhaltungen:
- DE-U1-202012 010 243

## Beschreibung

Die Erfindung betrifft einen Bauwerksabschnitt mit Fensterrahmen, bei dem der Fensterrahmen in eine seitlich vor die Wandebene platzierte Fensterzarge eingesetzt ist.

Seit einigen Jahren werden Wandöffnungen für Fenster künstlich nach außen, in die Wärmedämmebene oder Luftschichtebene, hin verlängert. Gemäß EP 2 639 394 A2 wird ein Stützteil aus Last tragendem Hartschaumstoff seitlich an der Wand verschraubt und dient, insbesondere an der Unterseite, der Abstützung des einzusetzenden Fensterrahmens. In diesem Wärmedämmverbundsystem bildet z.B. eine Vorwand mit der inneren Wand einen Zwischenraum, in dem das Stützteil angeordnet ist. Das Last tragende Stützteil mit mehr oder weniger dreieckigem Querschnitt wird durch ein Isolierteil ergänzt, das beispielsweise aus hartem Weichschaum besteht und gemeinsam mit dem Stützteil einen zweiteiligen Körper mit vorzugsweise quaderförmigem Querschnitt bildet. Das Isolierteil muss nach der Verschraubung des Stützteils an der inneren Wand gesondert mit dem Stützteil verbunden werden.

DE 20 2012 010 243 U1 offenbart ein Dämmelementsystem zum Anschluss eines Wärmedämmverbundsystems an ein eine Gebäudeöffnung verschließendes Fenster- oder Türelement gemäß dem Oberbegriff des Anspruchs 1.

Der vorliegenden Erfindung liegt die Aufgabe zugrunde, einen Bauwerksabschnitt anzugeben, bei dem der nach außen versetzte Fensterrahmen optimal abgestützt und isoliert ist und dessen Fertigstellung besonders einfach und kostengünstig von statten geht.

Diese Aufgabe wird durch die Merkmale des Anspruchs 1 gelöst.

Der erfindungsgemäße Bauwerksabschnitt umfasst eine Wand und eine umlaufende Fensterzarge, in die ein Fensterrahmen eingefügt ist, wobei die umlaufende Fensterzarge gegenüber einer Ebene der Wand vorversetzt ist. Die Fensterzarge weist mehrere in einem Abstand zueinander und seitlich von der Wand angeordnete Stützabschnitte auf, wobei jeder Stützabschnitt ein Stützteil und ein Isolierteil aufweist. Das Stützteil weist einen ersten Schenkel mit einer der Wand zugewandten ersten Seitenfläche und einen zweiten Schenkel, der auf der der ersten Seitenfläche gegenüberliegenden Seite vom ersten Schenkel abragt, auf. Das Stützteil ist aus einem tragfähigen Material gebildet. Das Isolierteil besteht aus verdichteter Mineralwolle oder einem Hartschaum und umgibt den zweiten Schenkel des Stützteils an drei Seiten. Der erste Schenkel des Stützteils ist mittels mindestens eines Befestigungselements mit der Wand verschraubt. Außerdem weist die Fensterzarge in den Bereichen zwischen den Stützabschnitten Isolierabschnitte auf, die aus verdichteter Mineralwolle oder einem Hartschaum bestehen. Der Fensterrahmen ist unter Zwischenschaltung zumindest eines Abschnitts der Isolierteile an den zweiten Schenkeln der Stützteile der Stützabschnitte mittels Schraubelementen verschraubt. Die Isolierteile der Stützabschnitte und die Isolierabschnitte sind derart angeordnet und ausgestaltet, dass sie eine im Wesentlichen durchgängige Isolierung des Fensterrahmens entlang der Fensterzarge bewirken.

Mit dieser Ausgestaltung sind eine sichere Abstützung und eine hochwertige Isolierung des Fensterrahmens in einer der Wandebene vorgelagerten Ebene möglich. Außerdem lässt sich eine solche Fensterzarge auf einfache Weise in Teilstücken zur Baustelle transportieren und mit geringem Aufwand an der Wand anbringen.

Vorzugsweise sind die Isolierabschnitte zweiteilig gestaltet mit einem Füllelement als Basis und einem darauf gesteckten Isolierteil. Es können auch mehrere Füllelemente nebeneinander angeordnet sein. Es können auch mehrere Isolierteile des Isolierabschnitts nebeneinander angeordnet sein.

Besonders vorteilhaft ist es, wenn die Isolierteile der Isolierabschnitte und die Isolierteile der Stützabschnitte einen gleichen Querschnitt aufweisen. In diesem Fall können beide im selben Fertigungsprozess hergestellt werden.

Dies weiterführend ist es besonders vorteilhaft, wenn das Isolierteil zumindest eines Isolierabschnitts und das Isolierteil zumindest eines Stützabschnitts miteinander einstückig ausgestaltet sind. Auf diese Weise wird der Zusammenbau der Fensterzarge noch weiter vereinfacht.

In einer bevorzugten Ausführungsform entsprechen die Füllelemente im Wesentlichen der Grundform der Stützteile der Stützabschnitte. Dadurch wird gewährleistet, dass identisch ausgebildete Isolierteile sowohl auf die Stützteile als auch auf die Füllelemente aufgesteckt werden können.

Generell ist es bevorzugt, wenn die Füllelemente Hohlräume im Inneren der Isolierteile der Isolierabschnitte im Wesentlichen vollständig ausfüllen. Dadurch wird die Isolierwirkung optimiert. Es ist auch möglich, dass ein Füllelement den Hohlraum nicht vollständig ausfüllt und somit eine oder mehrere abgeschlossene Luftkammern verbleiben, die ebenso zur Isolierwirkung beitragen.

Die Isolierabschnitte sind vorzugsweise mit der Wand verklebt. Hierdurch wird eine luftdichte Verbindung zwischen Isolierabschnitt und Wand geschaffen und außerdem die Montage der Isolierabschnitte einfach gestaltet.

In bevorzugten Ausführungsformen können die Isolierabschnitte auch mit den Stützabschnitten verklebt sein. Hierdurch wird eine sichere Verhaftung der Isolierabschnitte mit den Stützabschnitten gewährleistet, unabhängig von weiteren Befestigungsmaßnahmen.

Bevorzugt weisen die Stützteile der Stützabschnitte außerdem einen Stützblock auf, der zwischen dem ersten Schenkel und der Wand angeordnet ist. Auf diese Weise können die zum Befestigen des Fensterrahmens vorgesehenen Schenkel des Stützteils noch weiter gegenüber der Ebene der Wand vorversetzt werden.

Vorzugsweise ist der Stützblock aus einem Last tragenden Hartschaum gebildet. Die Stabilität des Stützteils wird dadurch sichergestellt und gleichzeitig das Gewicht des Stützteils minimal gehalten.

Der erste und zweite Schenkel jedes Stützteils sind vorzugsweise aus Metall, besonders bevorzugt aus Stahl oder Aluminium, gebildet. Auf diese Weise wird eine sichere Lastabtragung des Gewichts des Fensterrahmens erzielt.

Das Isolierteil jedes Stützabschnitts weist mindestens einen Einschnitt auf, in den der zweite Schenkel des Stützteils eingeführt ist. Auf diese Weise kann das Isolierteil besonders einfach auf das Stützteil aufgesteckt werden und wird dadurch zugleich in Position gehalten. Dies gilt insbesondere, wenn der zweite Schenkel jedes Stützteils rechtwinklig vom ersten Schenkel des Stützteils abragt.

In bevorzugten Ausführungsformen weist jedes Stützteil außerdem einen dritten Schenkel auf, der parallel zum zweiten Schenkel, und beabstandet vom zweiten Schenkel, vom ersten Schenkel abragt, wobei das Isolierteil des Stützabschnitts sowohl den zweiten Schenkel als auch den dritten Schenkel des Stützteils an drei Seiten umgibt, und wobei die Schraubelemente zur Befestigung des Fensterrahmens auch durch die dritten Schenkel der Stützteile geschraubt sind. Diese Ausgestaltung erhöht die Sicherheit bei der Verschraubung des Fensterrahmens und gewährleistet eine zusätzliche Sicherung der Schraubelemente gegen ein Verdrehen bzw. Verkippen.

Weitere Vorteile und Eigenschaften des erfindungsgemäßen Bauwerksabschnitts ergeben sich aus der nachfolgenden Beschreibung unter Bezugnahme auf die Zeichnungen.
- Fig. 1: ist eine schematische Perspektivansicht eines Ausschnitts eines erfindungsgemäßen Bauwerksabschnitts mit einer Fensterzarge und einem in die Fensterzarge eingesetzten Fensterrahmen;
- Fig. 2: ist eine Perspektivansicht von Teilen einer Fensterzarge, die bei dem erfindungsgemäßen Bauwerksabschnitt verwendet werden kann;
- Fig. 3: ist eine Querschnittsansicht eines Stützabschnitts der Fensterzarge aus Fig. 2 mit daran verschraubtem Fensterrahmen;
- Fig. 4: ist eine Perspektivansicht von Teilen einer weiteren Fensterzarge, die bei dem erfindungsgemäßen Bauwerksabschnitt verwendet werden kann; und
- Fig. 5: ist eine Querschnittsansicht eines Stützabschnitts der Fensterzarge aus Fig. 4 mit daran verschraubtem Fensterrahmen.

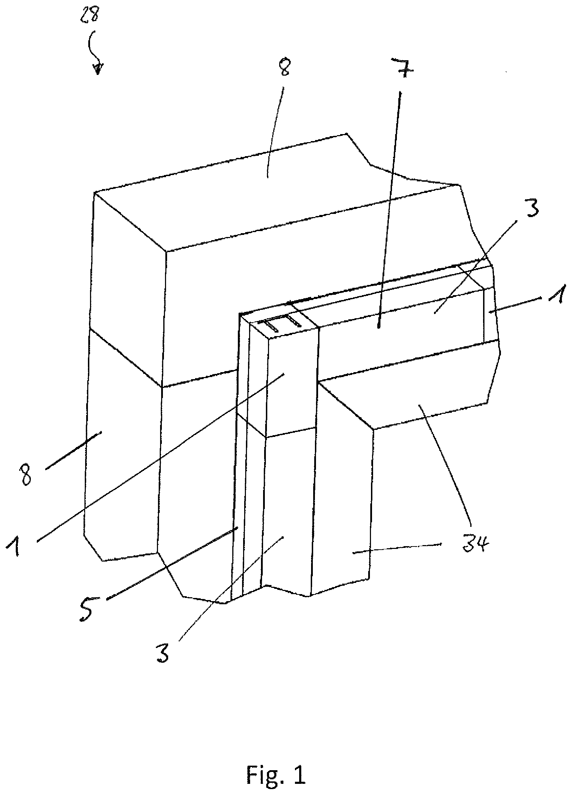

In Fig. 1 ist ein erfindungsgemäßer Bauwerksabschnitt 28 schematisch dargestellt. Der dargestellte Bauwerksabschnitt 28 kann neben der Wand 8, an der die Fensterzarge 7 befestigt ist, auch noch eine Vorwand (nicht dargestellt) umfassen, die in der Regel durch ein Wärmedämmmaterial gebildet ist. Diese Vorwand wird entweder ohne Zwischenraum direkt an der Wand 8 befestigt, oder sie ist hinterlüftet und in dem Zwischenraum zwischen Wand 8 und Vorwand ist die Fensterzarge 7 angeordnet.

Die Fensterzarge 7 ist in jedem Fall vor die Ebene der Wand 8 gesetzt (in Richtung des Gebäudeäußeren) und der Fensterrahmen 34 stützt sich an der Fensterzarge 7 ab. Die Fensterzarge 7 umfasst mehrere voneinander beabstandet angeordnete Stützabschnitte 1 und in den Bereichen zwischen den Stützabschnitten 1 Isolierabschnitte 3.

Wie aus Fig. 1 hervorgeht, können die Stützabschnitte 1 in allen Bereichen der Fensterzarge 7 angeordnet sein (es sind jeweils nur zwei von vier Seiten der Fensteröffnung abschnittsweise dargestellt). In jedem Fall müssen unterhalb der Fensteröffnung mindestens ein und vorzugsweise mindestens zwei Stützabschnitte 1 angebracht sein, da dort die hauptsächliche Gewichtslast des Fensters aufliegt. Die Länge eines Stützabschnitts 1 beträgt vorzugsweise 2 bis 50 cm, besonders bevorzugt 3 bis 20 cm.

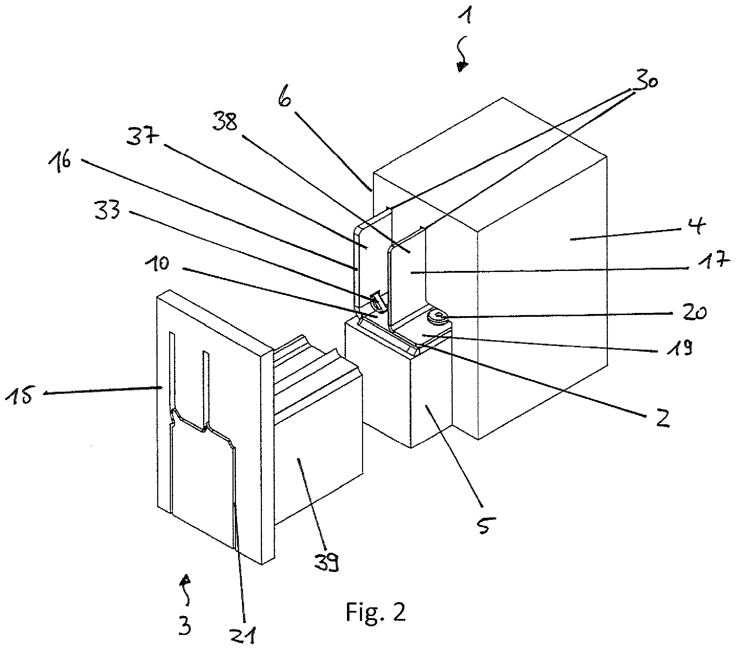

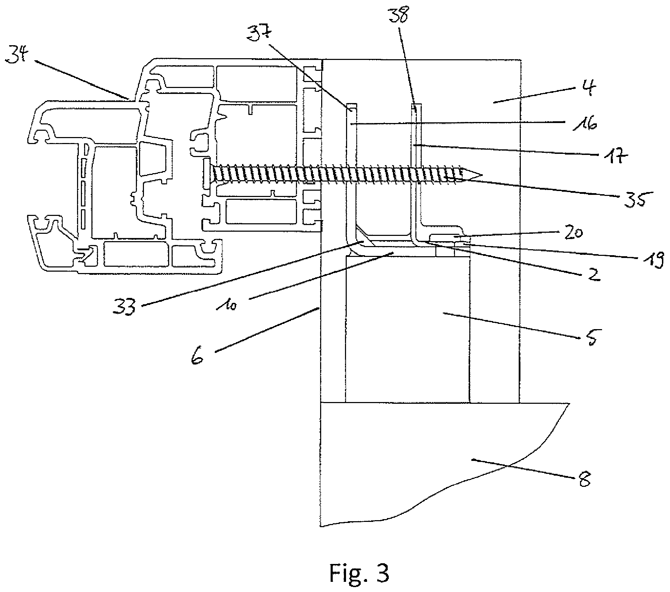

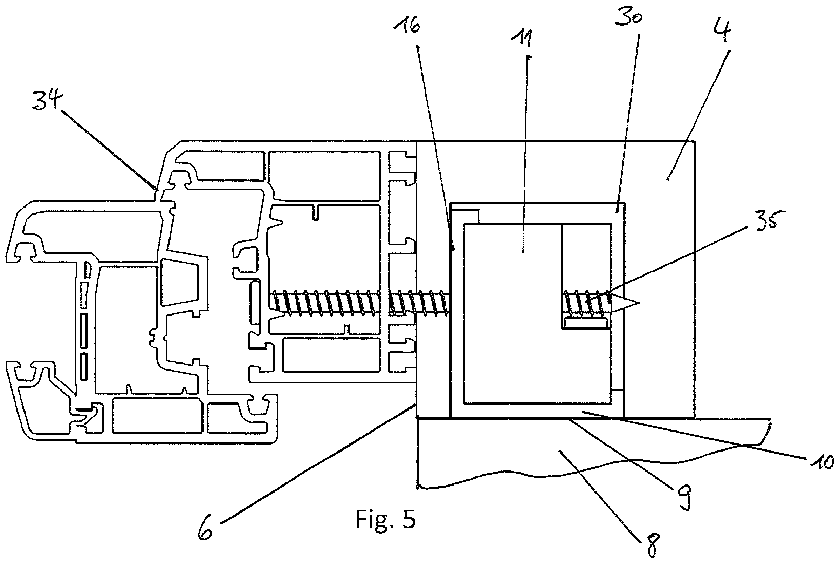

Der Fensterrahmen 34 stützt sich an den Stützabschnitten 1 ab, genauer gesagt auf einer Seitenfläche 6 jedes Stützabschnitts 1, die in der Regel eine Seitenfläche eines Isolierteils 4 des Stützabschnitts 1 ist (siehe Fig. 2 bis 5). Wie aus Fig. 3 und 5 hervorgeht, ist der Fensterrahmen 34 grundsätzlich mittels mindestens eines Schraubelements 35 mit jedem Stützabschnitt 1 verschraubt.

Die Stützteile 2 der Stützabschnitte 1 werden mittels Befestigungselementen 20 (Fig. 2 bis 5), konkret Schrauben, mit der Wand 8 verschraubt. Die Isolierabschnitte 3 sind üblicherweise mit der Wand 8 verklebt.

Grundsätzlich werden die einzelnen Stützabschnitte 1 und Isolierabschnitte 3 so zugeschnitten, dass sie stumpf aneinander stoßen. An den Stoßstellen sind sie dann vorzugsweise miteinander verklebt.

Details bestimmter Ausführungsformen von im Rahmen der Erfindung verwendeten Fensterzargen 7 werden nun unter Bezugnahme auf Fig. 2 bis 5 näher beschrieben.

Es sei vorab darauf hingewiesen, dass die Ausrichtung der Stützabschnitte 1 in Fig. 2 bis 5 am Beispiel einer Anordnung rechts vom Fensterrahmen 34 dargestellt ist. Die Seitenfläche 6, auf der der Fensterrahmen 34 abgestützt ist, verdeutlicht in allen Figuren die Ausrichtung des Stützabschnitts 1.

In Fig. 2 und 3 sind Teile einer ersten Ausführungsform der Fensterzarge 7 dargestellt. Der Stützabschnitt 1 umfasst ein Stützteil 2, mit dem ein Isolierteil 4 verbunden ist. Das Stützteil 2 ist aus einem tragfähigen Material gebildet, das dazu geeignet ist, die Last des Fensters zu tragen, ohne sich dabei zu verformen. Holz, Kunststoff oder ein Hartschaummaterial kann als Material des Stützteils 2 verwendet werden. Bevorzugt und für bestimmte Elemente (erster Schenkel 10 und zweiter Schenkel 16) des Stützteils 2 äußerst vorteilhaft ist aber ein Metall, beispielsweise Stahl oder Aluminium.

Das Stützteil 2 weist einen ersten Schenkel 10 auf, der eine in Längsrichtung verlaufende erste Seitenfläche 9 aufweist, die der Wand 8 zugewandt ist (Fig. 3). Im ersten Schenkel 10 können eine oder vorzugsweise mehrere Durchgangsbohrungen (nicht dargestellt) vorgesehen sein, die zum Durchtritt eines oder mehrerer Befestigungselemente 20 dienen. Wie bereits oben erwähnt, dient jedes Befestigungselement 20 zur Verschraubung des Stützteils 2 und somit des Stützabschnitts 1 an der Wand 8. Von den Befestigungselementen 20 sind in den Zeichnungen jeweils nur die Schraubenköpfe sichtbar.

Ebenso ist es möglich, dass keine Durchgangsbohrung im ersten Schenkel 10 des Stützteils 2 vorgesehen ist, sondern die Durchgangsbohrung erst vor Ort durch den Handwerker in das Stützteil 2 eingebracht wird.

Ein zweiter Schenkel 16 des Stützteils 2 ragt unter einem rechten Winkel vom ersten Schenkel 10 ab und erstreckt sich im Einbauzustand vom Schenkel 10 aus weg von der Wand 8.

Außerdem weist das Stützteil 2 einen dritten Schenkel 17 auf, der parallel zum zweiten Schenkel 16, und beabstandet vom zweiten Schenkel 16, vom ersten Schenkel 10 abragt. Die Dicke des dritten Schenkels 17 ist im dargestellten Beispielsfall identisch zur Dicke des zweiten Schenkels 16, aber dies kann vom Fachmann nach Belieben modifiziert werden. Die Schenkel 16, 17 sind hier als schmale, quaderförmige Leisten mit einer Dicke von 0,5 bis 20 mm, vorzugsweise von 1 bis 15 mm, ausgebildet; jeder von ihnen kann aber auch einen anderen Querschnitt, z.B. einen kegelförmigen Querschnitt, aufweisen.

Die in Fig. 2 und 3 dargestellte Ausführungsform des Stützabschnitts 1 beinhaltet konkret zwei L-förmige Winkelelemente 37, 38, die aufeinander gesetzt werden und mittels des Befestigungselements 20 miteinander und mit der Wand 8 verbunden sind. Die Winkelelemente 37, 38 sind vorzugsweise aus Metall, besonders bevorzugt aus Stahl oder Aluminium. Das erste Winkelelement 37 bildet dabei den ersten Schenkel 10 und den zweiten Schenkel 16 des Stützteils 2, während das Winkelelement 38 den dritten Schenkel 17 sowie einen vierten Schenkel 19 des Stützteils 2 umfasst. Der vierte Schenkel 19 ist parallel zum ersten Schenkel 10 angeordnet, aber kürzer ausgestaltet. Das Befestigungselement 20 ragt im Einbauzustand sowohl durch den vierten Schenkel 19 als auch den ersten Schenkel 10 des Stützteils 2.

Im Knickbereich zwischen dem ersten Schenkel 10 und dem zweiten Schenkel 16 kann mindestens eine Versteifungsrippe 33 angeordnet sein. Form und Ausgestaltung der Versteifungsrippe 33 sind für den Fachmann variierbar. Auch andere Versteifungsmaßnahmen können hilfreich sein (beispielsweise durch Materialkrümmung).

Um einen größeren Abstand von der Wand 8 zu erzielen, ist im Bereich der ersten Seitenfläche 9 des ersten Schenkels 10 ein Stützblock 5 angeordnet, der im Einbauzustand (Fig. 3) zwischen erstem Schenkel 10 des Stützteils 2 und Wand 8 angeordnet ist. Der Stützblock 5 ist Teil des Stützteils 2 und wird von den Befestigungselementen 20 vollständig durchdrungen (nicht dargestellt). Der Stützblock 5 ist aus einem Last tragenden Material gebildet, vorzugsweise besteht er aus einem Last tragenden Hartschaummaterial mit einem Volumengewicht >100 kg/m³, bevorzugt >200 kg/m³. Ein derartiger Hartschaum ist beispielsweise unter der Bezeichnung "Purenit" oder "Compacfoam" bekannt. Es ist bevorzugt, dass das Isolierteil 4 auch den Stützblock 5 seitlich umgibt und besonders bevorzugt sich bis zur Wand 8 erstreckt.

Wie aus Fig. 3 ersichtlich ist, ist der Fensterrahmen 34 im Einbauzustand mit dem zweiten Schenkel 16 und dem dritten Schenkel 17 des Stützteils 2 verschraubt. Im vorliegenden Fall dient in erster Linie der zweite Schenkel 16 zur Lastabtragung über das mindestens eine Befestigungselement 20 unter Zwischenschaltung des Stützblocks 5, während der dritte Schenkel 17 maßgeblich dazu dient, ein Verkippen des Schraubelements 35 durch Fixierung an einer zweiten Stelle zu verhindern.

Die Seitenfläche 6 des Stützabschnitts 1, die zur Abstützung des Fensterrahmens 34 dient, liegt immer im Bereich des zweiten Schenkels 16, ist aber als Seitenfläche des Isolierteils 4 ausgestaltet. Mit anderen Worten liegt der Fensterrahmen 34 niemals direkt auf dem zweiten Schenkel 16 des Stützteils 2 auf, sondern es liegt immer zumindest ein Abschnitt des Isolierteils 4 dazwischen. Gegebenenfalls kann zwischen Isolierteil 4 und Fensterrahmen 34 noch weiteres Isolier- oder Dämmmaterial eingebracht sein. Die Lastabtragung erfolgt immer in erster Linie über den zweiten Schenkel 16 des Stützteils 2. Dazu ist der Fensterrahmen 34 durch das Isolierteil 4 hindurch mit dem Stützteil 2 verschraubt (Fig. 3).

Das Isolierteil 4 ist aus Hartschaum oder aus verdichteter Mineralwolle gebildet. In der Regel sind derartige Materialien selbsttragend, können aber keine Last abtragen. Beispiele derartiger Materialien sind Polystyrol, Polyurethan, Holzschäume, etc. mit Raumgewichten < 100 kg/m³, vorzugsweise < 50 kg/m³, die als Wärmedämmstoffe gelten, jedoch noch keine so große statische Aufgabe übernehmen können wie ähnliche Hartschäume mit Volumengewichten > 100 kg/m³ oder sogar > 200 kg/m³. Vorzugsweise ist das Isolierteil 4 luftdicht.

Das Isolierteil 4 ist mit dem Stützteil 2 verbunden und zumindest an der der ersten Seitenfläche 9 abgewandten Seite des ersten Schenkels 10 des Stützteils 2 angeordnet. Das Isolierteil 4 ist in der dargestellten Ausführungsform einstückig. Das Isolierteil 4 weist zwei Einschnitte 30 auf, in die der zweite Schenkel 16 und der dritte Schenkel 17 des Stützteils eingeführt sind. Somit umgibt das Isolierteil 4 sowohl den zweiten Schenkel 16 als auch den dritten Schenkel 17 des Stützteils 2 an jeweils drei Seiten.

In der in Fig. 3 dargestellten Einbausituation kann das Isolierteil 4 zusätzlich mit der Wand 8 verklebt sein. Außerdem kann das Isolierteil 4 auch im Bereich des ersten Schenkels 10 und/oder des zweiten Schenkels 16 und/oder des dritten Schenkels 17 und/oder des vierten Schenkels 19 mit dem Stützteil 2 verklebt sein. Die Verklebung kann jeweils vollflächig oder abschnittsweise erfolgen. Dies gilt auch für die Klebeverbindung zwischen Isolierteil 4 und Wand 8.

An dem zweiten Schenkel 16 und/oder dem dritten Schenkel 17 des Stützteils 2 können Widerhaken 25 ausgebildet sein, die für eine Fixierung des Isolierteils 4 am Stützteil 2 sorgen.

Im Rahmen der Erfindung sind verschiedene Modifikationen des Stützabschnitts 1 möglich. Als einfachste Modifikation können die Schenkel 10, 16, 17 einstückig miteinander ausgebildet sein und der vierte Schenkel 19 kann entfallen.

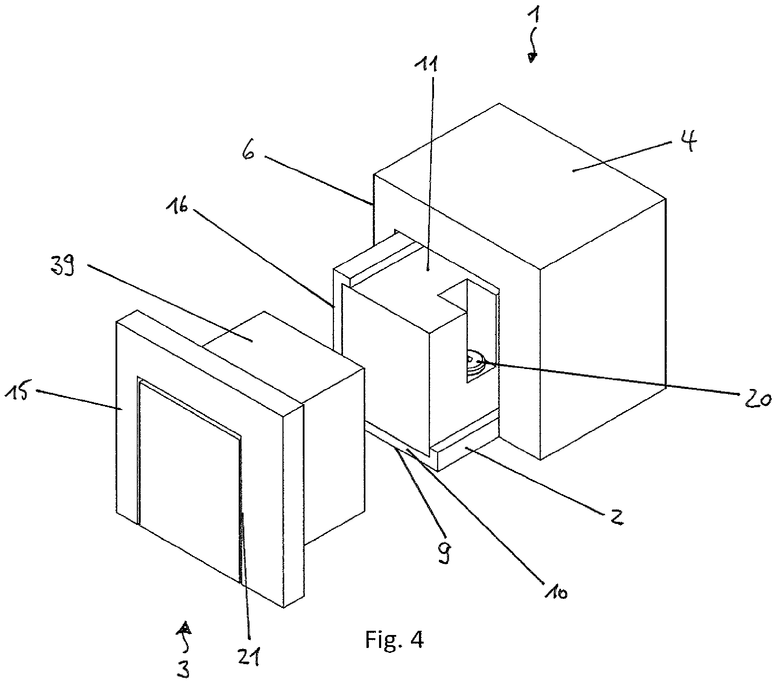

Die Darstellung in Fig. 2 zeigt schematisch außerdem einen Isolierabschnitt 3, der ein Füllelement 39 und ein Isolierteil 15 aufweist. In der Darstellung (auch in Fig. 4) sind der Isolierabschnitt 3 und der Stützabschnitt 1 der besseren Übersichtlichkeit voneinander beabstandet dargestellt. In Wirklichkeit liegen diese Elemente möglichst eng aneinander. Ebenso sind die Isolierteile 4, 15 nur teilweise dargestellt, um die innenliegenden Teile freizulegen. In Wirklichkeit überdecken die Isolierteile 4, 15 das Stützteil 2 und das Füllelement 39 vorzugsweise vollständig.

In der Ausgestaltung gemäß Fig. 2 ist das Füllelement 39 derart gestaltet, dass es eine der Form des Stützteils 2 annähernd entsprechende Form aufweist, sodass ein identisch geformtes Isolierteil 4, 15 sowohl über das Stützteil 2 als auch über das Füllelement 39 gestülpt werden kann. Im vorliegenden Beispielsfall sind lediglich die abstehenden Schenkel des Stützteils 2 beim Füllelement 39 nicht nachgebildet worden. Das Füllelement 39 füllt also den im Isolierteil 15 gebildeten Hohlraum 21 nahezu vollständig aus.

Das Füllelement 39 ist vorzugsweise aus demselben Material gebildet wie das Isolierteil 4. Das Füllelement 39 ist vorzugsweise mit der Wand 8 verklebt und kann ebenso mit dem Stützteil 2 verklebt sein.

Das Isolierteil 15 ist vorzugsweise aus demselben Material gebildet wie das Isolierteil 4. Die Isolierteile 15 sind vorzugsweise mit der Wand 8 verklebt und können ebenso mit den Isolierteilen 4 verklebt sein. Das Isolierteil 15 ist ebenfalls in den Überdeckungsbereichen vorzugsweise mit den Füllelementen 39 verklebt.

Besonders bevorzugt ist es, wenn ein Isolierteil 4 und ein Isolierteil 15 zumindest in Abschnitten der Fensterzarge 7 als ein einstückiges Teil ausgestaltet sind. In jedem Fall ist es wünschenswert, dass die Isolierteile 4, 15 dieselbe Querschnittsform aufweisen.

Die in Fig. 4 und 5 dargestellte Ausführungsform der Teile der Fensterzarge 7 unterscheidet sich von der in Fig. 2 und 3 dargestellten Ausführungsform dadurch, dass im Stützteil 2 nur ein Winkel vorgesehen ist mit einem ersten Schenkel 10 und einem zweiten Schenkel 16. Außerdem ist kein Stützblock 5 vorhanden, dafür aber ein im Innenraum des Winkels angeordneter Füllblock 11. Der Füllblock 11 besteht aus demselben Material wie zuvor für den Stützblock 5 beschrieben. Er dient in erster Linie der Verdrehsicherung der Schraubelemente 35.

Die Befestigungselemente 20 sind in diesem Fall nicht nur durch den ersten Schenkel 10, sondern auch durch den Füllblock 11 geschraubt. Der Füllblock 11 kann eine Ausnehmung aufweisen, in die der Schraubenkopf versenkt wird.

In diesem Ausführungsbeispiel ist der Einschnitt 30 im Isolierteil 4 entsprechend größer, da im Einschnitt 30 nicht nur der zweite Schenkel 16 aufgenommen wird, sondern auch der Füllblock 11.

Entsprechend ist das Füllelement 39 an die neue Form des Stützteils 2 angepasst.

Bezug nehmend auf Fig. 2 bis 5 wird nun ein bevorzugtes Verfahren zur Anordnung eines Fensterrahmens 34 an einer Wand 8 eines Bauwerksabschnitts 28 beschrieben. Zunächst werden die Stützteile 2, konkret zumindest der erste Schenkel 10, mittels Befestigungselementen 20 an der Wand 8 verschraubt. Zusätzlich kann eine Klebeverbindung zwischen Stützteil 2 und Wand 8 erfolgen.

Im Anschluss werden die Füllelemente 39 zurechtgeschnitten und in den Bereichen zwischen den Stützabschnitten 1 an die Wand 8 geklebt, sodass ein umlaufender Rahmen gebildet wird.

Anschließend werden die Isolierteile 4, 15 oder das einstückige Isolierteil 4, 15 derart auf die Stützteile 2 und die Füllelemente 39 aufgesetzt, dass der zweite Schenkel 16 und der dritte Schenkel 17 des Stützteils 2 in die zugehörigen Einschnitte 30 des Isolierteils 4 eindringen und die Füllelement 39 die Hohlräume 21 im Isolierteil 15 im Wesentlichen ausfüllen.

Das Isolierteil 4, 15 wird dabei in der Regel so weit vorgeschoben, bis es die Wand 8 bzw. den ersten Schenkel 10 des Stützteils 2 bzw. das Füllelement 39 berührt. Unter Umständen können zusätzliche Klebeverbindungen zwischen Isolierteil 4, 15 und Wand 8 hergestellt werden, ebenso kann eine Klebeverbindung zwischen dem Isolierteil 4, 15 und dem Stützteil 2 bzw. Füllelement 39 für einen sicheren Zusammenhalt der nun gebildeten Fensterzarge 7 sorgen.

Anschließend erfolgt das Verschrauben des Fensterrahmens 34 unter Zwischenschaltung zumindest eines Abschnitts der Isolierteile 4 mit zumindest den zweiten Schenkeln 16 der Stützteile 2 der Stützabschnitte 1.

Alle beschriebenen Einzelheiten können jeweils bei den verschiedenen dargestellten Ausführungsformen ausgetauscht und verändert werden.

Die Stützblöcke 5 können in allen beliebigen Ausgestaltungen verwendet werden, insbesondere auch bei der Ausgestaltung gemäß Fig. 4 und 5. Ein Füllblock 11 kann ebenfalls bei allen Ausführungsformen verwendet werden, insbesondere auch bei der in Fig. 2 und 3 dargestellten Ausführungsform.

Schließlich sind auch die Zahl und räumliche Anordnung der Befestigungselemente 20 und Schraubelemente 35 für den Fachmann je nach Anwendungsbereich frei wählbar.

In allen Ausführungsformen ist es auch denkbar, dass das Isolierteil 4 den zweiten Schenkel 16 und/oder dritten Schenkel 17 des Stützteils 2 an einer oder an mehreren Seiten nur teilweise, aber nicht vollständig umgibt.

Ebenso können in der Einbausituation zusätzliche Isoliermaterialien zur Isolierung verwendet werden.

Alle genannten Klebeverbindungen werden bevorzugt auf zumindest eines der beiden zu verbindenden Teile aufgebracht, vorzugsweise als Kleberaupe, bevor die Zusammenfügung erfolgt.

Füllelement 39 und Isolierteil 15 können einstückig miteinander ausgebildet sein. Alternativ können Isolierteil 4 und Isolierteil 15 einstückig miteinander ausgebildet sein. Ebenso können Füllelement 39, Isolierteil 15 und Isolierteil 4 auch gesamthaft einstückig miteinander ausgebildet sein. In diesem Fall ergibt sich eine unregelmäßige Form in Längsrichtung der Fensterzarge 7.

## Patentansprüche

1. Bauwerksabschnitt (28) mit
einer Wand (8),
einer umlaufenden Fensterzarge (7), in die ein Fensterrahmen (34) eingefügt ist, wobei die umlaufende Fensterzarge (7) gegenüber einer Ebene der Wand (8) vorversetzt ist,
wobei die Fensterzarge (7) mehrere seitlich von der Wand (8) angeordnete Stützabschnitte (1) aufweist, wobei jeder Stützabschnitt (1) ein Stützteil (2) und ein Isolierteil (4) aufweist, wobei das Stützteil (2) einen ersten Schenkel (10) mit einer der Wand (8) zugewandten ersten Seitenfläche (9) und einen zweiten Schenkel (16), der auf der der ersten Seitenfläche (9) gegenüberliegenden Seite vom ersten Schenkel (10) abragt, aufweist, wobei das Stützteil (2) aus einem tragfähigen Material gebildet ist, wobei das Isolierteil (4) aus verdichteter Mineralwolle oder einem Hartschaum besteht, wobei das Isolierteil (4) den zweiten Schenkel (16) des Stützteils (2) an drei Seiten umgibt, und wobei der erste Schenkel (10) des Stützteils (2) mittels mindestens eines Befestigungselements (20) mit der Wand (8) verschraubt ist,
wobei der Fensterrahmen (34) an den zweiten Schenkeln (16) der Stützteile (2) der Stützabschnitte (1) mittels Schraubelementen (35) verschraubt ist, und
wobei die Isolierteile (4) der Stützabschnitte (1) und die Isolierabschnitte (3) derart angeordnet und ausgestaltet sind, dass sie eine im Wesentlichen durchgängige Isolierung des Fensterrahmens (34) entlang der Fensterzarge (7) bewirken,
**dadurch gekennzeichnet, dass**
die Stützabschnitte (1) in einem Abstand zueinander angeordnet sind,
die Fensterzarge (7) außerdem in den Bereichen zwischen den Stützabschnitten (1) Isolierabschnitte (3) aufweist, die aus verdichteter Mineralwolle oder einem Hartschaum bestehen, und
die Verschraubung des Fensterrahmens (34) und der zweiten Schenkel (16) der Stützteile (2) der Stützabschnitte (1) unter Zwischenschaltung zumindest eines Abschnitts der Isolierteile (4) erfolgt.

2. Bauwerksabschnitt (28) nach Anspruch 1, **dadurch gekennzeichnet, dass** die Isolierabschnitte (3) zweiteilig gestaltet sind mit einem Füllelement (39) als Basis und einem darauf gesteckten Isolierteil (15).

3. Bauwerksabschnitt (28) nach Anspruch 2, **dadurch gekennzeichnet, dass** die Isolierteile (15) der Isolierabschnitte (3) und die Isolierteile (4) der Stützabschnitte (1) einen gleichen Querschnitt aufweisen.

4. Bauwerksabschnitt (28) nach Anspruch 2 oder 3, **dadurch gekennzeichnet, dass** das Isolierteil (15) zumindest eines Isolierabschnitts (3) und das Isolierteil (4) zumindest eines Stützabschnitts (1) miteinander einstückig ausgestaltet sind.

5. Bauwerksabschnitt (28) nach einem der Ansprüche 2 bis 4, **dadurch gekennzeichnet, dass** die Füllelemente (39) im Wesentlichen der Grundform der Stützteile (2) der Stützabschnitte (1) entsprechen.

6. Bauwerksabschnitt (28) nach einem der Ansprüche 2 bis 5, **dadurch gekennzeichnet, dass** die Füllelemente (39) Hohlräume (21) im Inneren der Isolierteile (15) der Isolierabschnitte (3) im Wesentlichen vollständig ausfüllen.

7. Bauwerksabschnitt (28) nach einem der vorangehenden Ansprüche, **dadurch gekennzeichnet, dass** die Isolierabschnitte (3) mit der Wand (8) verklebt sind.

8. Bauwerksabschnitt (28) nach einem der vorangehenden Ansprüche, **dadurch gekennzeichnet, dass** die Isolierabschnitte (3) mit den Stützabschnitten (1) verklebt sind.

9. Bauwerksabschnitt (28) nach einem der vorangehenden Ansprüche, **dadurch gekennzeichnet, dass** die Stützteile (2) der Stützabschnitte (1) außerdem einen Stützblock (5) aufweisen, der zwischen dem ersten Schenkel (10) und der Wand (8) angeordnet ist.

10. Bauwerksabschnitt (28) nach Anspruch 9, **dadurch gekennzeichnet, dass** der Stützblock (5) aus einem Last tragenden Hartschaum gebildet ist.

11. Bauwerksabschnitt (28) nach Anspruch 9 oder 10, **dadurch gekennzeichnet, dass** der Stützblock (5) quaderförmig ist.

12. Bauwerksabschnitt (28) nach einem der vorangehenden Ansprüche, **dadurch gekennzeichnet, dass** zumindest der erste (10) und zweite Schenkel (16) jedes Stützteils (2) aus Metall, vorzugsweise aus Stahl oder Aluminium, gebildet ist.

13. Bauwerksabschnitt (28) nach einem der vorangehenden Ansprüche, **dadurch gekennzeichnet, dass** das Isolierteil (4) jedes Stützabschnitts (1) mindestens einen Einschnitt (30) aufweist, in den der zweite Schenkel (16) des Stützteils (2) eingeführt ist.

14. Bauwerksabschnitt (28) nach einem der vorangehenden Ansprüche, **dadurch gekennzeichnet, dass** der zweite Schenkel (16) jedes Stützteils (2) rechtwinklig vom ersten Schenkel (10) des Stützteils (2) abragt.

15. Bauwerksabschnitt (28) nach einem der vorangehenden Ansprüche, **dadurch gekennzeichnet, dass** jedes Stützteil (2) einen dritten Schenkel (17) aufweist, der parallel zum zweiten Schenkel (16), und beabstandet vom zweiten Schenkel (16), vom ersten Schenkel (10) abragt, wobei das Isolierteil (4) des Stützabschnitts (1) sowohl den zweiten Schenkel (16) als auch den dritten Schenkel (17) des Stützteils (2) an drei Seiten umgibt, und wobei die Schraubelemente (35) zur Befestigung des Fensterrahmens (34) auch durch die dritten Schenkel (17) der Stützteile (2) geschraubt sind.

## Claims

1. Building structure portion (28) having
a wall (8),
a peripheral window case (7) into which a window frame (34) is inserted, wherein the peripheral window case (7) is offset forward with respect to a plane of the wall (8),
wherein the window case (7) has a plurality of supporting portions (1) which are arranged laterally from the wall (8), wherein each supporting portion (1) has a supporting part (2) and an insulating part (4), wherein the supporting part (2) has a first leg (10) with a first lateral surface (9) facing the wall (8), and a second leg (16) which projects from the first leg (10) on the side opposite the first lateral surface (9), wherein the supporting part (2) is formed from a load-bearing material, wherein the insulating part (4) consists of compressed mineral wool or a hard foam, wherein the insulating part (4) surrounds the second leg (16) of the supporting part (2) on three sides, and wherein the first leg (10) of the supporting part (2) is screwed to the wall (8) by means of at least one fastening element (20),
wherein the window frame (34) is screwed to the second legs (16) of the supporting parts (2) of the supporting portions (1) by means of screw elements (35), and
wherein the insulating parts (4) of the supporting portions (1) and the insulating portions (3) are arranged and configured in such a way that they bring about a substantially continuous insulation of the window frame (34) along the window case (7),
**characterized in that**
the supporting portions (1) are arranged at a distance from one another,
the window case (7) additionally has, in the regions between the supporting portions (1), insulating portions (3) which consist of compressed mineral wool or a hard foam, and
the screwing of the window frame (34) and of the second legs (16) of the supporting parts (2) of the supporting portions (1) occurs with the interposition of at least one portion of the insulating parts (4).

2. Building structure portion (28) according to Claim 1, **characterized in that** the insulating portions (3) are of two-part configuration with a filling element (39) as base and an insulating part (15) plugged thereon.

3. Building structure portion (28) according to Claim 2, **characterized in that** the insulating parts (15) of the insulating portions (3) and the insulating parts (4) of the supporting portions (1) have an identical cross section.

4. Building structure portion (28) according to Claim 2 or 3, **characterized in that** the insulating part (15) of at least one insulating portion (3) and the insulating part (4) of at least one supporting portion (1) are configured in one piece with one another.

5. Building structure portion (28) according to one of Claims 2 to 4, **characterized in that** the filling elements (39) substantially correspond to the basic shape of the supporting parts (2) of the supporting portions (1).

6. Building structure portion (28) according to one of Claims 2 to 5, **characterized in that** the filling elements (39) substantially completely fill cavities (21) in the interior of the insulating parts (15) of the insulating portions (3).

7. Building structure portion (28) according to one of the preceding claims, **characterized in that** the insulating portions (3) are adhesively bonded to the wall (8).

8. Building structure portion (28) according to one of the preceding claims, **characterized in that** the insulating portions (3) are adhesively bonded to the supporting portions (1).

9. Building structure portion (28) according to one of the preceding claims, **characterized in that** the supporting parts (2) of the supporting portions (1) additionally have a supporting block (5) which is arranged between the first leg (10) and the wall (8) .

10. Building structure portion (28) according to Claim 9, **characterized in that** the supporting block (5) is formed from a load-bearing hard foam.

11. Building structure portion (28) according to Claim 9 or 10, **characterized in that** the supporting block (5) is cuboidal.

12. Building structure portion (28) according to one of the preceding claims, **characterized in that** at least the first leg (10) and second leg (16) of each supporting part (2) are formed from metal, preferably from steel or aluminium.

13. Building structure portion (28) according to one of the preceding claims, **characterized in that** the insulating part (4) of each supporting portion (1) has at least one incision (30) into which the second leg (16) of the supporting part (2) is inserted.

14. Building structure portion (28) according to one of the preceding claims, **characterized in that** the second leg (16) of each supporting part (2) projects at a right angle from the first leg (10) of the supporting part (2).

15. Building structure portion (28) according to one of the preceding claims, **characterized in that** each supporting part (2) has a third leg (17) which projects from the first leg (10) parallel to the second leg (16), and at a distance from the second leg (16), wherein the insulating part (4) of the supporting portion (1) surrounds both the second leg (16) and the third leg (17) of the supporting part (2) on three sides, and wherein the screw elements (35) for fastening the window frame (34) are also screwed through the third legs (17) of the supporting parts (2).

## Revendications

1. Section d'ouvrage de construction (28) avec
une paroi (8),
un dormant de fenêtre (7) périphérique, dans lequel est inséré un cadre de fenêtre (34),
dans laquelle le dormant de fenêtre (7) périphérique est décalé au préalable par rapport à un plan de la paroi (8), dans laquelle le dormant de fenêtre (7) présente plusieurs sections d'appui (1) disposées de manière latérale par rapport à la paroi (8), dans laquelle chaque section d'appui (1) présente une partie d'appui (2) et une partie d'isolation (4), dans laquelle la partie d'appui (2) présente une première branche (10) avec une première surface latérale (9) tournée vers la paroi (8) et une deuxième branche (16), qui dépasse de la première branche (10) sur le côté faisant face à la première surface latérale (9), dans laquelle la partie d'appui (2) est formée à partir d'un matériau solide, dans laquelle la partie d'isolation (4) est constituée d'une laine minérale compactée ou d'une mousse dure, dans laquelle la partie d'isolation (4) entoure la deuxième branche (16) de la partie d'appui (2) au niveau de trois côtés, et dans laquelle la première branche (10) de la partie d'appui (2) est vissée à la paroi (8) au moyen d'au moins un élément de fixation (20),
dans laquelle le cadre de fenêtre (34) est vissé au niveau des deuxièmes branches (16) des parties d'appui (2) des sections d'appui (1) au moyen d'éléments de vissage (35), et
dans laquelle les parties d'isolation (4) des sections d'appui (1) et les sections d'isolation (3) sont disposées et configurées de telle manière qu'elles entraînent une isolation sensiblement continue du cadre de fenêtre (34) le long du dormant de fenêtre (7),
**caractérisée en ce que**
les sections d'appui (1) sont disposées à une distance les unes par rapport aux autres,
le dormant de fenêtre (7) présente par ailleurs, dans les zones entre les sections d'appui (1), des sections d'isolation (3), qui sont constituées de laine minérale compactée ou d'une mousse dure, et **en ce que** le vissage du cadre de fenêtre (34) et des deuxièmes branches (16) des parties d'appui (2) des sections d'appui (1) est effectué en intercalent au moins une section des parties d'isolation (4).

2. Section d'ouvrage de construction (28) selon la revendication 1, **caractérisée en ce que** les sections d'isolation (3) sont configurées en deux parties avec un élément de remplissage (39) en tant que base et une partie d'isolation (15) enfichée sur celui-ci.

3. Section d'ouvrage de construction (28) selon la revendication 2, **caractérisée en ce que** les parties d'isolation (15) des sections d'isolation (3) et les parties d'isolation (4) des sections d'appui (1) présentent une section transversale identique.

4. Section d'ouvrage de construction (28) selon la revendication 2 ou 3, **caractérisée en ce que** la partie d'isolation (15) d'au moins une section d'isolation (3) et la partie d'isolation (4) d'au moins une section d'appui (1) sont configurées entre elles d'un seul tenant.

5. Section d'ouvrage de construction (28) selon l'une quelconque des revendications 2 à 4, **caractérisée en ce que** les éléments de remplissage (39) correspondent sensiblement à la forme de base des parties d'appui (2) des sections d'appui (1).

6. Section d'ouvrage de construction (28) selon l'une quelconque des revendications 2 à 5, **caractérisée en ce que** les éléments de remplissage (39) remplissent sensiblement en totalité des espaces creux (21) dans l'intérieur des parties d'isolation (15) des sections d'isolation (3).

7. Section d'ouvrage de construction (28) selon l'une quelconque des revendications précédentes, **caractérisée en ce que** les sections d'isolation (3) sont collées à la paroi (8) .

8. Section d'ouvrage de construction (28) selon l'une quelconque des revendications précédentes, **caractérisée en ce que** les sections d'isolation (3) sont collées aux sections d'appui (1).

9. Section d'ouvrage de construction (28) selon l'une quelconque des revendications précédentes, **caractérisée en ce que** les parties d'appui (2) des sections d'appui (1) présentent par ailleurs un bloc d'appui (5), qui est disposé entre la première branche (10) et la paroi (8).

10. Section d'ouvrage de construction (28) selon la revendication 9, **caractérisée en ce que** le bloc d'appui (5) est formé à partir d'une mousse dure porteuse de charge.

11. Section d'ouvrage de construction (28) selon la revendication 9 ou 10, **caractérisée en ce que** le bloc d'appui (5) est de forme parallélépipédique.

12. Section d'ouvrage de construction (28) selon l'une quelconque des revendications précédentes, **caractérisée en ce qu'**au moins la première (10) et la deuxième branche (16) de chaque partie d'appui (2) sont formées à partir de métal, de préférence à partir d'acier ou d'aluminium.

13. Section d'ouvrage de construction (28) selon l'une quelconque des revendications précédentes, **caractérisée en ce que** la partie d'isolation (4) de chaque section d'appui (1) présente au moins une entaille (30), dans laquelle la deuxième branche (16) de la partie d'appui (2) est introduite.

14. Section d'ouvrage de construction (28) selon l'une quelconque des revendications précédentes, **caractérisée en ce que** la deuxième branche (16) de chaque partie d'appui (2) dépasse à angle droit de la première branche (10) de la partie d'appui (2).

15. Section d'ouvrage de construction (28) selon l'une quelconque des revendications précédentes, **caractérisée en ce que** chaque partie d'appui (2) présente une troisième branche (17), qui dépasse de la première branche (10) parallèlement à la deuxième branche (16) et à distance de la deuxième branche (16), dans laquelle la partie d'isolation (4) de la section d'appui (1) entoure à la fois la deuxième branche (16) et la troisième branche (17) de la partie d'appui (2) au niveau de trois côtés, et dans laquelle les éléments de vissage (35) sont vissés aux fins de la fixation du cadre de fenêtre (34) également par les troisièmes branches (17) des parties d'appui (2).
